# EUROPÄISCHE PATENTANMELDUNG

(11) **EP 1 380 409 A2**
(43) Veröffentlichungstag der Anmeldung: **14.01.2004**
(21) Anmeldenummer: 03013131.2
(22) Anmeldetag: 11.06.2003
(51) Int. Cl.: B31D 1/02

(54) **Etikettenbahn, und Verfahren zu ihrer Herstellung**

(30) Priorität: 10.07.2002 DE 10231076
(71) Anmelder: HERMA GmbH, 70327 Stuttgart (DE)
(72) Erfinder: Schweikhardt, René, Dipl.-Ing., 73630 Remshalden (DE); Ruck, Hans-Dieter, Dipl.-Ing., 72631 Aichtal (DE)
(74) Vertreter: Raible, Tobias, Dipl.-Phys.

(57) **Zusammenfassung**

Eine Etikettenbahn (22) hat ein auf einer Trägerseite abhäsiv ausgebildetes Trägermaterial (28), ferner auf diesem Trägermaterial angeordnete bedruckte Etiketten (23) aus einem thermoplastischen Kunststoff, welche auf ihrer der abhäsiven Seite des Trägermaterials (28) zugewandten Seite mit einem Klebstoff (32) versehen sind. Ferner hat sie Abschnitte (62) aus einem thermoplastischen Werkstoff, welche jeweils mindestens eine Teilfläche eines zugeordneten Etiketts (23) überdecken und an Teilen von dessen Berandung, unter Bildung einer an einer Seite (100) offenen Tasche (116), durch mindestens eine Schweißnaht (98) mit dem betreffenden Etikett (23) verschweißt sind, wobei die mindestens eine Schweißnaht (98) beim thermischen Stanzen eines Etikettenrandes gebildet ist. - Ferner wird ein Verfahren zur Herstellung einer solchen Etikettenbahn angegeben.

## Beschreibung

Etiketten werden in vielfältigen Formen hergestellt. Oft haben sie neben ihrer Funktion, Werbung oder Information zu übermitteln, auch eine Zusatzfunktion, z.B. bei Etiketten für Arzneimittel, wo häufig abreißbare Teile vorgesehen sind, die der Arzt/das Krankenhaus zur Dokumentation abreißen und auf eine Karteikarte aufkleben kann. Auch solche komplizierten Etiketten müssen einfach und preiswert hergestellt werden können.

Es ist deshalb eine Aufgabe der Erfindung, ein neues Etikett, und ein Verfahren zu seiner Herstellung, bereitzustellen.

Nach einem ersten Aspekt der Erfindung wird diese Aufgabe gelöst durch ein Verfahren gemäß Patentanspruch 1. Ein solches Verfahren gestattet es, in einfacher Weise eine Etikettenbahn herzustellen, auf der taschenförmige Etiketten angeordnet sind. Solche Etiketten können leicht von der Trägerbahn abgelöst und auf einen Gegenstand aufgeklebt werden, und man kann dann in die auf einem Etikett gebildete Tasche einen beliebigen Gegenstand stecken, z.B. einen Datenträger, eine Scheckkarte, eine Gebrauchsanleitung oder dergleichen.

Eine besonders vorteilhafte Weiterbildung der Erfindung ist Gegenstand des Patentanspruchs 2. Dadurch, dass die Ränder verschweißt werden und dabei gleichzeitig das sogenannte "Gitter" thermisch ausgestanzt wird, ergibt sich eine einfache und preiswerte Herstellung mit wenigen Verfahrensschritten.

Eine andere Lösung der gestellten Aufgabe ergibt sich durch den Gegenstand des Patentanspruchs 4. Ein solches Etikett verbindet Robustheit mit einfacher Herstellung.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: eine bevorzugte Ausführungsform einer Maschine 20 zur Herstellung einer erfindungsgemäßen Etikettenbahn,
- Fig. 2: eine bevorzugte Ausführungsform einer Etikettenbahn 22 nach der Erfindung mit Etiketten, die mit Taschen versehen sind,
- Fig. 3: ein Einzeletikett, welches auf einem Abschnitt einer Trägerbahn lösbar festgeklebt ist, und
- Fig. 4: einen stark schematisierten Schnitt durch eine Einzelheit, welcher zeigt, wie gleichzeitig die Ränder eines Etiketts verschweißt werden und das Abfallgitter thermisch ausgestanzt wird.

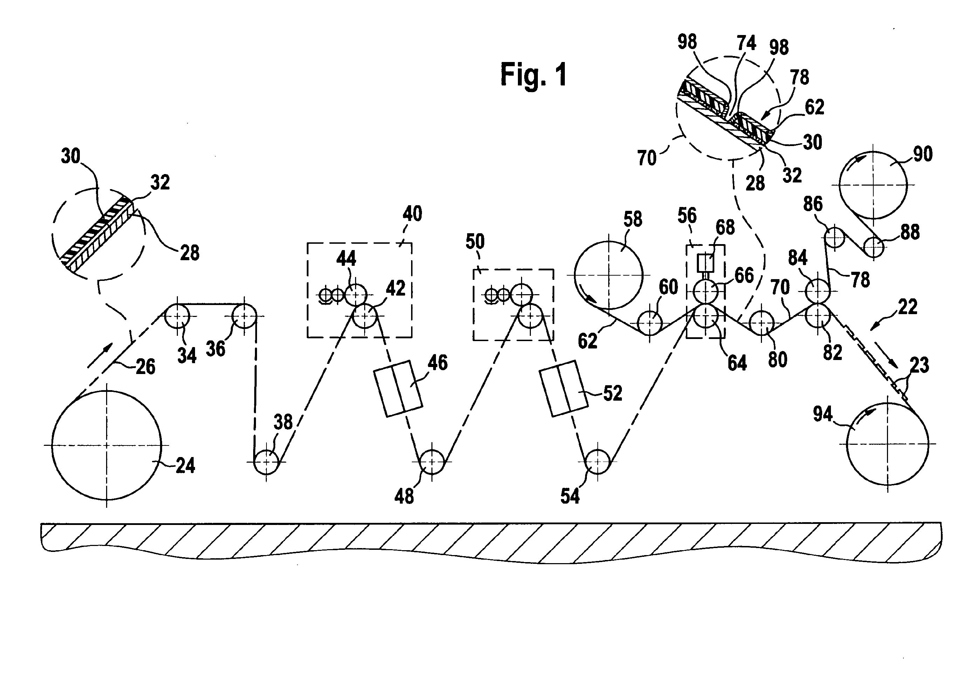

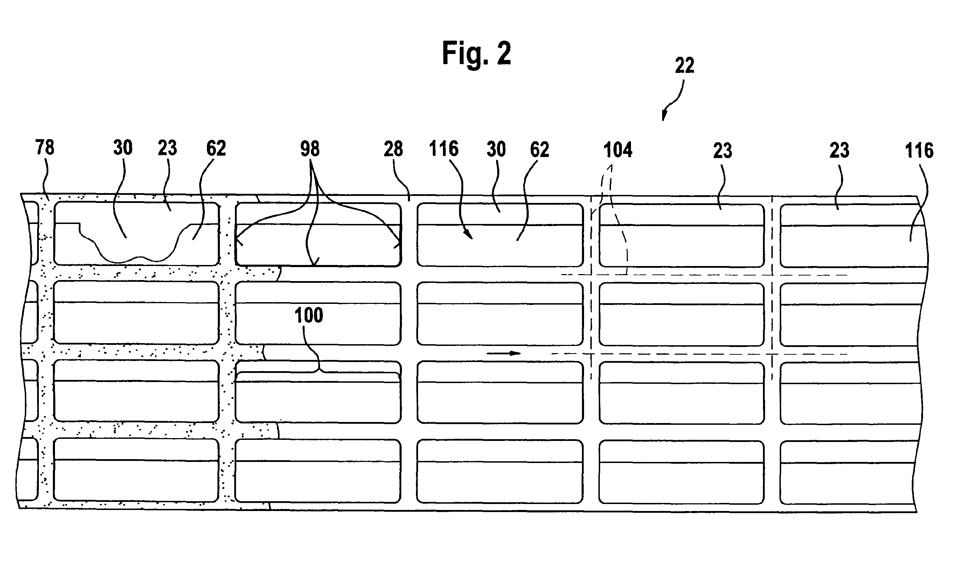

**Fig. 1** zeigt eine Maschine 20 zur Herstellung einer in Fig. 2 beispielhaft dargestellten Etikettenbahn 22, bei welcher die einzelnen, bedruckten Etiketten 23 auf ihrer Vorderseite mit transparenten Taschen versehen sind, wie das nachfolgend beschrieben wird.

Mit 24 ist eine Abwickelrolle bezeichnet, von der eine Basisfolie 26 abgewickelt wird. Wie in Fig. 1 schematisch dargestellt, hat diese eine Trägerbahn 28, gewöhnlich aus Spezialpapier, das auf seiner Oberseite mit einer abhäsiven Schicht (Silikon) versehen ist. Auf der Trägerbahn 28 befindet sich eine Kunststofffolie 30 aus Polypropylen (PP), auf deren Unterseite sich eine Haftkleberschicht 32 befindet, mit der die PP-Folie 30 lösbar auf die Trägerbahn 28 aufgeklebt ist. Derartige Basisfolien 26 sind, in den verschiedensten Zusammensetzungen, handelsübliche Produkte.

Über drei Umlenkrollen 34, 36, 38 wird die Basisfolie 26 von unten einer ersten Druckstation 40 zugeführt und dort bedruckt z.B. schwarz/weiß oder mit einer ersten Farbe. Das Druckwerk 40 hat einen üblichen Aufbau mit einer Stütz- und Umlenkwalze 42 und einer Farbwalze 44. Ggf. kann auch die Unterseite der Trägerbahn 28 bedruckt werden, z.B. mit einer Gebrauchsanleitung.

Die bedruckte Basisfolie 26 wird in einem Trockner 46 getrocknet und über eine Umlenkrolle 48 von unten einer zweiten Druckstation 50 zugeführt, die gleich aufgebaut ist wie die Druckstation 40 und zum Aufdruck einer zweiten Farbe dient. Von dort gelangt die bedruckte Basisfolie 26 zu einem Trockner 52, ggf. zu weiteren Druckstationen, und dann über eine Umlenkwalze 54 von unten zu einer Schweiß- und Trennvorrichtung 56. Dort werden beim vorliegenden Ausführungsbeispiel von einer Abwickelrolle 58 über eine Umlenkrolle 60 vier thermoplastische Folienstreifen 62 aus PP von oben zugeführt.

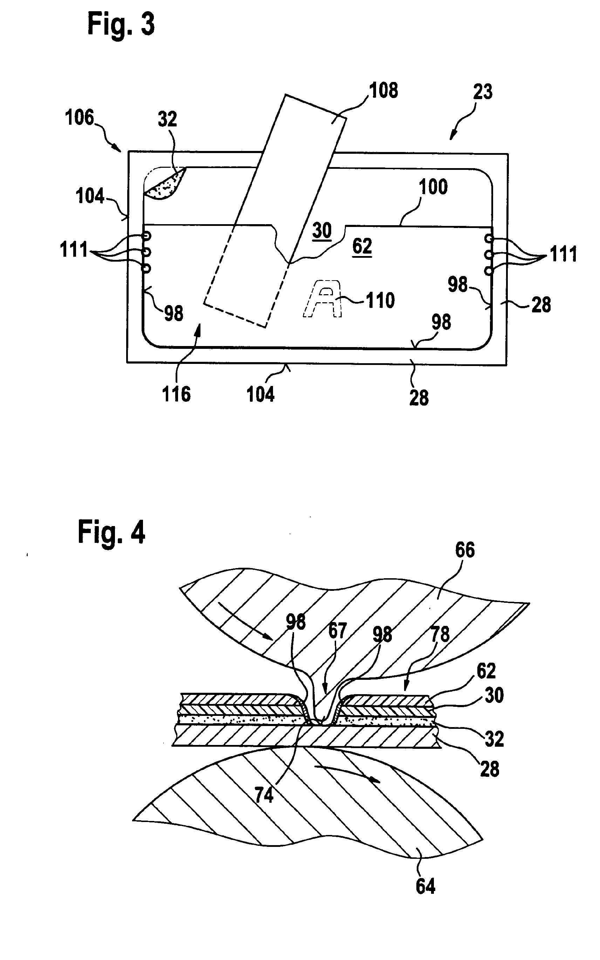

Die Schweiß- und Trennvorrichtung 56 hat unten eine nicht beheizte Stützrolle 64 und oben einen beheizten Schweiß- und Trennzylinder 66, der mittels eines Stellzylinders 68 angehoben oder abgesenkt werden kann. Wenn die Maschine 20 steht, wird mittels dieses Zylinders 68 der Schweiß- und Trennzylinder 66 von den Folienstreifen 62 und der Basisfolie 26 abgehoben. Fig. 4 zeigt einen vergrößerten Teilschnitt durch die Walzen 64 und 66 bei abgesenktem Zylinder 68.

Der beheizte Zylinder 66 hat auf seiner Oberfläche Vorsprünge 67 in der Form der Etiketten 23. Fig. 4 zeigt einen dieser Vorsprünge 67 im Querschnitt und in Aktion. Er verschweißt bei der Drehung der Walzen 64, 66 mittels Schweißnähten 98 den Folienstreifen 62 mit der Folienschicht 30 und erzeugt gleichzeitig eine Trennfuge 74, so dass ein abziehbares Abfallgitter 78 entsteht, dessen Form in der linken Hälfte von Fig. 2 durch schwarze Punkte schematisch angedeutet ist. (In Fig. 2 ist das Gitter 78 bereits abgezogen). Man kann diesen Vorgang als thermisches Stanzen bezeichnen.

Die verschweißte Folienbahn 70 wird über eine Umlenkrolle 80 zwei Walzen 82, 84 zugeführt, wo das Gitter 78 über zwei Umlenkrollen 86, 88 zu einer Aufwickelrolle 90 abgezogen und aufgewickelt wird.

Die Folienbahn 22 ohne Gitter 78 und mit den Etiketten 23, wie sie in Fig. 2 dargestellt ist, wird einer Aufwickelrolle 94 zugeführt und dort aufgewickelt.

**Fig. 2** zeigt auf der Trägerbahn 28 vier Reihen von Etiketten 23. Jedes Etikett 23 hat einen etwa rechteckförmigen, bedruckten Folienabschnitt 30, der mittels seiner Klebstoffschicht 32 (Fig. 1 und 3) auf der abhäsiven Seite der Trägerbahn 28 haftet. Auf jeden bedruckten Folienabschnitt 30 ist mittels der Schweißnähte 98 ein transparenter PP-Folienstreifen 62 aufgeschweißt, so dass eine Tasche 116 entsteht, die in einem Bereich 100 offen ist und dort etwas in diese Tasche 116 eingesteckt werden kann, z.B. ein Teststreifen 108, wie in Fig. 3 dargestellt.

Die Schweißnähte 98 entstehen gleichzeitig mit dem Heraustrennen des Gitters 78 in der Schweiß- und Trennstation 56.

Die einzelnen Etiketten 23 können ggf. durch Zerschneiden der Trägerbahn 28 längs Schnittstellen 104, welche in Fig. 2 angedeutet sind, weiter vereinzelt werden, wodurch man einzelne Einheiten 106 erhält, von denen eine in **Fig. 3** dargestellt ist. Zur Veranschaulichung einer Tasche 116 ist in diese ein Teststreifen 108 eingesteckt gezeichnet. Bei 110 ist ein Aufdruck auf der Basisfolie 30 angedeutet. Fig. 3 zeigt auch, dass in bevorzugter Weise dort, wo die Schweißnaht 98 an die Öffnung 100 angrenzt, Schweißpunkte 111 vorgesehen sind, welche dort die Schweißnaht 98 zusätzlich verstärken und eine seitliches Auf- oder Einreissen der Tasche 116 verhindern sollen. Solche Schweißpunkte werden durch eine entsprechende Formgebung der Schweißwalze 66 erzeugt.

Bei der Benutzung wird das Etikett 23 der Fig. 3 von der Trägerbahn 28 abgelöst und mittels seiner Klebstoffschicht 32 auf ein gewünschtes Objekt dauerhaft aufgeklebt. Hierzu kann das Etikett 23 Daten über dieses Objekt als Aufdruck enthalten, z.B. als Typenschild, und zusätzlich kann in die Tasche 116 noch eine Gebrauchsanleitung für dieses Objekt eingesteckt werden. Da die Folienstreifen 62 transparent sind, kann der Aufdruck 110 durch den betreffenden Folienstreifen 62 hindurch gelesen werden.

**Fig. 4** zeigt nochmals in vergrößerter Form und sehr stark schematisiert die Herstellung der Schweißnaht 98 zur Herstellung einer Tasche 116, und das gleichzeitige Abtrennen des Stanzgitters 78. Die geschieht durch Vorsprünge 67 der beheizten Walze 66, von denen in Fig. 4 einer beispielhaft in stark vergrößerter Form dargestellt ist.

Naturgemäß sind im Rahmen der vorliegenden Erfindung vielfache Abwandlungen und Modifikationen möglich.

## Patentansprüche

1. Verfahren zur Herstellung einer Etikettenbahn (22), welche eine auf einer Seite abhäsiv ausgebildete Trägerbahn (28) und auf dieser abhäsiven Seite lösbar festgeklebtes thermoplastisches Etikettenmaterial (30) aufweist, wobei der Klebstoff (32) auf der der Trägerbahn (28) zugewandten Seite des Etikettenmaterials (30) vorgesehen ist, und das Verfahren folgende Schritte aufweist:
Der von der Trägerbahn (28) abgewandten Seite des Etikettenmaterials (30) wird mindestens ein Folienstreifen (62) aus thermoplastischem Werkstoff zugeführt;
dieser Folienstreifen (62) wird, unter Bildung von an einer Seite (100) offenen Taschen (116), mit dem Etikettenmaterial (30) verschweißt;
durch Erhitzung der Ränder (98) von zu bildenden Etiketten (23) werden diese Ränder von einem Abfallgitter (78) getrennt;
das Abfallgitter (78) wird abgezogen.

2. Verfahren nach Anspruch 1, bei welchem die Erhitzung der Ränder (98) von zu bildenden Etiketten (23) gleichzeitig mit dem Verschweißen des Folienstreifens (62) mit dem Etikettenmaterial (30) erfolgt.

3. Verfahren nach Anspruch 1 oder 2, bei welchem das Etikettenmaterial (30) und/oder der Folienstreifen (62) in einem dem Verschweißen vorausgehenden Verfahrensschritt bedruckt wird bzw. werden.

4. Etikettenbahn, welche aufweist:
Ein auf einer Seite abhäsiv ausgebildetes Trägermaterial (28);
auf dieser abhäsiven Seite des Trägermaterials (28) angeordnete, vorzugsweise bedruckte Etiketten (23) aus einem thermoplastischen Kunststoff, welche auf ihrer der abhäsiven Seite zugewandten Seite mit einem Klebstoff (32) versehen sind;
Abschnitte (62) aus einem thermoplastischen Werkstoff, welche Abschnitte (62) jeweils mindestens eine Teilfläche eines zugeordneten Etiketts (23) überdecken und an Abschnitten zugeordneter Etikettenränder, unter Bildung einer an einer Seite (100) offenen Tasche (116), durch mindestens eine Schweißnaht (98) mit dem betreffenden Etikett (23) verschweißt sind; wobei mindestens eine Schweißnaht (98) beim thermischen Stanzen eines Etikettenrandes gebildet ist.

5. Etikettenbahn nach Anspruch 4, bei welcher die mindestens eine Schweißnaht (98) an mindestens einer Stelle durch einen Schweißpunkt (111) verstärkt ist.

6. Etikettenbahn nach Anspruch 5, bei welcher der mindestens eine Schweißpunkt (111) im Bereich der Öffnung (100) einer Tasche (116) angeordnet ist, um dort die Schweißnaht (98) zu verstärken.
